(19) **Europäisches Patentamt**
**European Patent Office**
**Office européen des brevets**

(11) **EP 4 386 881 A1**

(12) **EUROPEAN PATENT APPLICATION**
published in accordance with Art. 153(4) EPC

(43) Date of publication:
**19.06.2024 Bulletin 2024/25**

(21) Application number: **22856159.3**

(22) Date of filing: **09.08.2022**

(51) International Patent Classification (IPC):
*H01M 4/13* (2010.01)   *H01M 4/134* (2010.01)
*H01M 4/62* (2006.01)   *H01M 10/42* (2006.01)
*H01M 4/38* (2006.01)   *H01M 10/0562* (2010.01)
*H01M 10/052* (2010.01)   *H01M 4/02* (2006.01)

(52) Cooperative Patent Classification (CPC):
**H01M 4/587; H01M 4/02; H01M 4/13; H01M 4/133;**
**H01M 4/134; H01M 4/38; H01M 4/382; H01M 4/62;**
**H01M 4/622; H01M 4/625; H01M 10/052;**
**H01M 10/0525; H01M 10/0562; H01M 10/42;**
H01M 2004/021;                    (Cont.)

(86) International application number:
**PCT/KR2022/011813**

(87) International publication number:
**WO 2023/018162 (16.02.2023 Gazette 2023/07)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.08.2021  KR 20210105107**

(71) Applicant: **Samsung SDI Co., Ltd.**
**Yongin-si, Gyeonggi-do 17084 (KR)**

(72) Inventors:
• **YANG, Jin Hoon**
  **Yongin-Si, Gyeonggi-do 17084 (KR)**

• **CHO, Byeong Gyu**
  **Yongin-Si, Gyeonggi-do 17084 (KR)**
• **KIM, Jin Kyu**
  **Yongin-Si, Gyeonggi-do 17084 (KR)**
• **JUNG, Yun Chae**
  **Yongin-Si, Gyeonggi-do 17084 (KR)**
• **HAN, Sang Il**
  **Yongin-Si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

(54) **NEGATIVE-ELECTRODE LAYER FOR ALL-SOLID-STATE SECONDARY BATTERY AND ALL-SOLID-STATE SECONDARY BATTERY COMPRISING SAME**

(57)    Provided are a negative electrode layer for an all-solid secondary battery, and an all-solid secondary battery including the same, the negative electrode layer comprising a negative electrode current collector and a first negative electrode active material layer including a carbon-based material, wherein the carbon-based material includes a mixture of amorphous carbon black and crystalline carbon black, and satisfies that the D peak to G peak intensity ratio of the amorphous carbon black, obtained by Raman analysis, is 1.5 or more, and the D peak to G peak intensity ratio of the crystalline carbon black, obtained by Raman analysis, is greater than 0.5 and less than 1.5.

EP 4 386 881 A1

FIG. 1A

FIG. 1C

FIG. 1B

FIG. 1D

(52) Cooperative Patent Classification (CPC): (Cont.)
H01M 2004/027; Y02E 60/10; Y02P 70/50

**Description**

BACKGROUND

TECHNICAL FIELD

The present disclosure relates to an all-solid secondary battery and a manufacturing method thereof.

BACKGROUND ART

Recently, in response to industrial demand, batteries having high energy density and safety have been actively developed. For example, lithium ion batteries are being put into practical use not only in the fields of information-related devices and communication devices, but also in the automotive field. In the automotive field, safety is especially important due to its potential impact on human life.

In currently commercialized lithium ion batteries, an electrolyte including a flammable organic solvent is used, and as a result, there is a possibility of overheating and fire when a short circuit occurs. Accordingly, an all-solid battery using a solid electrolyte, instead of an electrolyte, has been proposed.

Since the all-solid battery does not use a flammable organic solvent, the possibility of fire or explosion can be greatly reduced even in the event of a short circuit. Therefore, safety of such an all-solid battery can be greatly improved compared to a lithium ion battery using an electrolyte.

When manufacturing the negative electrode layer for an all-solid battery, a carbon-based material such as ketjen black or denka black may be used. However, when such a carbon-based material is used, dendrites locally grow due to the non-uniformity of the electrode plate, resulting in frequent short circuits and deterioration in output characteristics, so improvement is required.

DESCRIPTION OF EMBODIMENT

TECHNICAL PROBLEM

To solve the above problems, one aspect is to provide a negative electrode layer for an all-solid secondary battery in which the uniformity of an electrode plate is excellent and the occurrence of short circuit is reduced.

Another aspect is to provide an all-solid secondary battery in which, by including the negative electrode layer, the energy density is high and output characteristics are improved.

SOLUTION TO PROBLEM

According to an aspect, provided is a negative electrode layer for an all-solid secondary battery, comprising a negative electrode current collector and a first negative electrode active material layer including a carbon-based material, wherein the carbon-based material includes a mixture of amorphous carbon black and crystalline carbon black, and satisfies that a D peak to G peak intensity ratio of the amorphous carbon black, obtained by Raman analysis, is 1.5 or more, and a D peak to G peak intensity ratio of the crystalline carbon black, obtained by Raman analysis, is greater than 0.5 and less than 1.5.

A mixed weight ratio of the amorphous carbon black and the crystalline carbon black is 1:0.05 to 1:2.5.

According to another aspect, provided is an all-solid secondary battery comprising: a positive electrode layer; a negative electrode layer; and a solid electrolyte layer disposed between the positive electrode layer and the negative electrode layer, wherein

the negative electrode layer is the above-described negative electrode layer.

ADVANTAGEOUS EFFECTS OF DISCLOSURE

An all-solid secondary battery according to one aspect employs a negative electrode layer containing a carbon-based material to suppress occurrence of a short circuit, thereby improving output characteristics, and realizing high energy density.

BRIEF DESCRIPTION OF THE DRAWINGS

The above and other aspects, features, and advantages of certain embodiments of the disclosure will be more apparent from the following description taken in conjunction with the accompanying drawings, in which:

FIGS. 1A and 1B illustrate the results of Raman analysis of carbon A and carbon D, which are amorphous carbon blacks used in manufacturing a negative electrode layer according to an embodiment.

FIGS. 1C and 1D illustrate the results of Raman analysis of carbon K and carbon J, which are crystalline carbon blacks used in manufacturing a negative electrode layer according to an embodiment.

FIG. 2 schematically illustrates the structure of an all-solid secondary battery according to an embodiment.

FIG. 3 schematically illustrates the structure of an all-solid secondary battery according to another embodiment.

FIG. 4 schematically illustrates the structure of an all-solid secondary battery according to another embodiment.

BEST MODE

Hereinafter, a negative electrode layer for an all-solid secondary battery according to embodiments, an all-solid secondary battery including the same, and a manufacturing method thereof will be described in more detail.

Amorphous carbon such as ketjen black is used when manufacturing the negative electrode layer for an all-solid battery. Amorphous carbon helps lithium ions move smoothly and acts like a buffer, but dendrites grow locally due to the non-uniformity of an electrode plate, which can increase the probability of short circuit. In addition, when crystalline carbon such as denka black is used in manufacturing a negative electrode layer, the uniformity and physical properties of an electrode plate are excellent owing to its high crystallinity, but output characteristics may be considerably deteriorated due to difficult movement of lithium ions.

In order to manufacture an all-solid secondary battery having improved output characteristics while reducing the probability of short circuit occurrence by solving the above-mentioned problems, the inventors of the present invention use a mixture of amorphous carbon black and crystalline carbon black when forming a negative electrode active material layer in the manufacture of a negative electrode layer.

A negative electrode layer for an all-solid secondary battery according to an embodiment includes a first negative electrode active material layer containing a negative electrode current collector and a carbon-based material, wherein the carbon-based material includes a mixture of amorphous carbon black and crystalline carbon black. A D peak to G peak intensity ratio of the amorphous carbon black, obtained by Raman analysis, is 1.5 or more, and a D peak to G peak intensity ratio of the crystalline carbon black, obtained by Raman analysis, is greater than 0.5 and less than 1.5. A mixed weight ratio of the amorphous carbon black and the crystalline carbon black is 1:0.05 to 1:2.5.

The D peak to G peak intensity ratio of the amorphous carbon black is, for example, 1.6 to 4.0, 1.61 to 3.5, 1.62 to 3.0 or 1.65 to 2.82.

The D peak to G peak intensity ratio of the crystalline carbon black is 0.8 to 1.5, 0.9 to 1.3, 1.0 to 1.2, or 1.07 to 1.13. If the D peak to G peak intensity ratios are out of the ranges stated above, due to high crystallinity, charge/discharge are irreversibly performed, and thus, the role of a precipitation-type negative electrode is difficult to perform.

Carbon black shows peaks having wave numbers of 1350 cm-1, 1580 cm-1, and 2700 cm-1 in the Raman analysis spectrum. These peaks give information about the thickness, crystallinity and charge doping state of carbon black. The peak appearing at a wave number 1580 cm-1 is a peak referred to as G mode, which is caused by a vibration mode corresponding to stretching of a carbon-carbon bond, and the energy of the G-mode is determined by a density of excess electrical charge doped into graphene. In addition, the peak appearing at a wave number of 2700 cm-1 is a peak referred to as 2D-mode and is useful when evaluating the thickness of carbon black. The peak at 1350 cm-1 is a peak referred to as D mode, which appears when there is a defect in the SP2 crystal structure. In addition, the D peak to G peak intensity ratio gives information about the degree of disorder of crystals of carbon black.

A mixed weight ratio of the amorphous carbon black and the crystalline carbon black is 1:0.05 to 1:2.5. When the content of the amorphous carbon black is within the range stated above, an all-solid secondary battery having improved output characteristics while reducing occurrence of short circuits may be manufactured.

In the amorphous carbon black, the primary particle size is 15 nm to 60 nm, for example, 30 to 50 nm, and the specific surface area is 15 m2/g to 1500 m2/g, 20 m2/g to 500 m2/g, or 30 m2/g to 200 m2/g, the crystallite size Lc in the c-axis direction is 3.0 nm or less or 1.0 nm to 2.5 nm, and the carbon interlayer spacing (d-spacing) (d002) is 0.350 nm to 0.370 nm. In the present specification, Lc, which is the crystallite size in the c-axis direction, and the carbon interlayer spacing can be measured using Cu-K$\alpha$ characteristic X-ray diffraction (wavelength: about 1.54 Å) analysis.

The crystalline carbon black has a primary particle size of 15 nm to 60 nm, or 35 nm to 55 nm, a specific surface area of 15 m2/g to 500 m2/g, 20 m2/g to 500 m2/g, or 30 m2/g to 200 m2/g, and an Lc of 2.0 nm to 10.00 nm or 1.0 nm to 5.0 nm, and an interlayer spacing of carbon (d002) is 0.335 nm to 0.357 nm.

In the present specification, the term "size" refers to an average particle diameter when the particles are spherical, and refers to a long-axis length when the particles are non-spherical. A particle size can be measured by using a scanning electron microscope or a particle size analyzer. As the particle size analyzer, for example, HORIBA, LA-950 laser particle size analyzer may be used.

When the particle size is measured by using a particle size analyzer, the average particle diameter refers to D50. D50 refers to a particle diameter corresponding to a volume of 50 % with respect to a cumulative particle distribution ordered from smallest size to largest size, and means the value of the particle diameter corresponding to 50 % from the smallest particles when the total number of particles is 100%.

D/G intensity ratios and BETs of amorphous carbon black and crystalline carbon black, according to an embodiment, are shown in Table 1 below.

[Table 1]

| Carbon type | Carbon | D/G intensity ratio | BET (m2/g) |
|---|---|---|---|
| Amorphous carbon black | A | 2.81 | 55 |
| | B | 2.82 | 55 |
| | C | 1.98 | 45 |
| | D | 1.65 | 62 |
| | E | 1.81 | 125 |
| | F | 2.72 | 53 |
| | G | 2.37 | 170 |
| | H | 1.66 | 800 |
| | I | 3.75 | 460 |
| Crystalline carbon black | J | 1.13 | 133 |
| | K | 1.07 | 39 |

In the all-solid secondary battery according to one embodiment, the negative electrode layer includes a negative electrode current collector and a first negative electrode active material layer, and the negative electrode current collector, the negative electrode active material layer, and a region therebetween are lithium (Li)-free regions that do not include Li at an initial state or post-discharge state of the all-solid secondary battery. The all-solid secondary battery according to an embodiment may include a lithium precipitation layer between the negative electrode current collector and the negative electrode active material during or after charging.

According to another aspect, an all-solid secondary battery having the above-described negative electrode layer is provided.

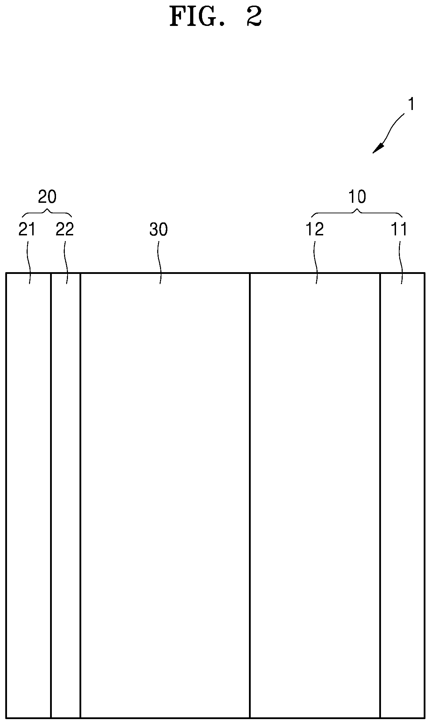

Referring to FIG. 2, the all-solid secondary battery 1 includes a positive electrode layer 10; a negative electrode layer 20; and a solid electrolyte layer 30 including a solid electrolyte disposed between the positive electrode layer 10 and the negative electrode layer 20.

The positive electrode layer 10 includes a positive electrode current collector 11 and a positive electrode active material layer 12 disposed on the positive electrode current collector 11, and the negative electrode layer 20 includes a negative electrode current collector 21 and a first negative electrode active material layer 22 according to an embodiment, disposed on the negative electrode current collector.

The first negative electrode active material layer 22 may further include a metal, a metalloid, or a combination thereof. The metal, metalloid or combination thereof includes, for example, silver, platinum, zinc, silicon, tin, iron, copper, aluminum, indium, bismuth or combinations thereof.

The content of the metal, metalloid, or combination thereof is 1 to 40 parts by weight, based on 100 parts by weight of the total weight of the first negative electrode active material layer, and the content of the carbon-based material is 60 to 99 parts by weight. The content of the metal, metalloid or combination thereof is, for example, 1 to 30 parts by weight, 2 to 20 parts by weight, or 3 to 15 parts by weight. When the content of the metal, metalloid, or combination thereof in the first negative electrode active material layer is within the range stated above, an all-solid secondary battery having improved cycle characteristics and output characteristics and high energy density may be manufactured.

The thickness of the first negative electrode active material layer 22 is 1 μm to 20 μm, for example, 1 μm to 10 μm, 2 μm to 8 μm, for example, 4 μm to 6 μm.

A lithium metal or lithium alloy thin film may be further included between the negative electrode current collector 21 and the first negative electrode active material layer 22. In addition, a metal or metalloid thin film may be further included between the negative electrode current collector 21 and the first negative electrode active material layer 22. The metal or metalloid thin film is gold (Au), silver (Ag), magnesium (Mg), zinc (Zn), silicon (Si), tin (Sn), platinum (Pt), palladium (Pd), aluminum (Al), bismuth (Bi), or a combination thereof, and the metal or metalloid thin film has a thickness of 1 nm to 800 nm, 2 nm to 500 nm, 5 nm to 100 nm, or 10 nm to 30 nm.

The first negative electrode active material layer 22 may have a porous structure. The porosity of the first negative electrode active material layer 22 is 30 % or less, for example, 5 % to 25 %. When the porosity of the first negative electrode active material layer 22 is within the range stated above, dendrites can be effectively suppressed from growing to the positive electrode active material layer, thereby suppressing the occurrence of short circuits due to dendrites, and manufacturing a solid secondary battery having high voltage and high capacity and excellent lifetime characteristics.

At the interface between the solid electrolyte layer 30 and the negative electrode current collector 21, lithium precipitation points are formed, and thus metal lithium may be deposited. Dendrites of the precipitated lithium grow toward the positive electrode active material layer 12 through pores of the solid electrolyte layer 30, which may cause a short circuit of the all-solid secondary battery 1.

However, when the porosity of the first negative electrode active material layer is within the range stated above, dendrites can be effectively suppressed from growing to the positive electrode active material layer side, thereby suppressing the occurrence of short circuits due to dendrites, and manufacturing an all-solid secondary battery having high voltage and high capacity and excellent lifetime characteristics.

In the present specification, the porosity can be confirmed through a mercury porosity measurement method or a scanning electron microscope (SEM). A method of measuring through a mercury porosity meter is to calculate the pore size and pore distribution by measuring the amount of mercury injected while introducing mercury into a sample.

The negative electrode layer according to one embodiment may further include a second negative electrode active material layer. The second negative electrode active material layer may be disposed on at least one of the first negative electrode active material layer and between the negative electrode current collector and the first negative electrode active material layer. The second negative electrode active material layer may include a metal, a metalloid element or a combination thereof capable of forming an alloy with lithium.

The metal, the metalloid element or the combination thereof capable of forming an alloy with lithium may include one or more selected from the group consisting of gold (Au), platinum (Pt), palladium (Pd), silicon (Si), silver (Ag), aluminum (Al), bismuth (Bi), tin (Sn), and zinc (Zn).

The second negative electrode active material layer may be, for example, a metal layer including lithium or a lithium alloy.

According to one embodiment, a surface of the second negative electrode active material layer may include lithium fluoride (LiF).

The second negative electrode active material layer may be a lithium-free region that does not include a lithium metal or a lithium alloy in an initial state or after discharging of the all-solid secondary battery. Before charging, the negative electrode layer may have a structure including a negative electrode current collector, a metal or metalloid film, and a first negative electrode active material layer. After the negative electrode layer is charged, a second negative electrode active material layer may be formed on the first negative electrode active material layer. The second negative electrode active material layer may be non-porous.

A carbon layer may be further included between the first negative electrode active material layer and the solid electrolyte layer. The carbon layer is formed by using, for example, carbon black, carbon fibers, graphite, carbon nanotubes, graphene, or a combination thereof. By forming the carbon layer in this way, resistance between the first negative electrode active material layer and the solid electrolyte layer can be lowered and lithium dendrites can be suppressed. Accordingly, the all-solid secondary battery including a negative electrode layer with the carbon layer further formed thereon may have further improved lifetime characteristics, compared to the all-solid secondary battery including a negative electrode layer without a carbon layer formed thereon.

A method for manufacturing an all-solid secondary battery according to an embodiment will be described.

First, a negative electrode layer including a negative electrode current collector and a first negative electrode active material layer is provided.

Separately, a positive electrode layer is provided.

After preparing a laminate by providing a solid electrolyte layer between the negative electrode layer and the positive electrode layer, a step of pressing the laminate is included.

The solid electrolyte layer is prepared by drying a composition containing a solid electrolyte, a binder and a solvent at 25 °C to 80 °C. The viscosity of the composition is controlled to about 200 cP to about 10,000 cP. When a solid electrolyte layer is formed by using the composition having such a viscosity, a solid electrolyte layer having excellent interfacial adhesion with the negative electrode layer may be prepared.

According to one embodiment, drying may be performed in a convection oven controlled at 25 to 75 °C.

According to another embodiment, drying may be performed in multiple steps, for example, in two steps. For drying, primary drying is performed at 25 °C to 70 °C, followed by secondary drying at 30 °C to 75°C. When the primary drying is performed at a higher temperature than the secondary drying, interface characteristics between the negative electrode layer and the solid electrolyte layer are improved.

The drying time is 30 minutes to 24 hours, 1 hour to 20 hours, or 2 hours to 15 hours.

When the laminate is pressed, pressing may be performed by roll press, flat press, hot press, warm isostatic press (WIP), or the like. For example, hydrostatic press may be used.

The pressing is performed at a temperature of room temperature (20 °C to 25 °C) to 90 °C. Alternatively, the pressing is performed at a high temperature of 100 °C or higher. The time during which pressing is applied is, for example, 30 minutes or less, 20 minutes or less, 15 minutes or less, or 10 minutes or less. The time during which the pressing is applied is 1 ms to 30 minutes, 1 ms to 20 minutes, 1 ms to 15 minutes, or 1 ms to 10 minutes. The pressing method is, for example, isotactic press, roll press, flat press, etc., but is not necessarily limited to these methods, and any suitable pressing method that is used in the art may be used. By such pressing, for example, solid electrolyte powder is sintered to form one solid electrolyte layer.

The pressing time may vary depending on the temperature and pressure, but is, for example, less than 30 minutes or less than 20 minutes.

After performing pressing, the thickness of the positive active material layer is about 100 to 150 $\mu$m, the thickness of the negative active material layer is 10 to 15 $\mu$m, and the thickness of the solid electrolyte layer is 100 to 150 $\mu$m.

According to one embodiment, the pressing is performed by WIP, and the pressure is 200 MPa to 600 MPa, 300 MPa to 550 MPa, 350 MPa to 520 MPa, 380 MPa to 500 MPa, or 400 MPa to 500 MPa.

The pressing is performed at a temperature of 60 °C to 90 °C, 65 °C to 88 °C, 70 °C to 85 °C, or 75 °C to 85 °C. In addition, the pressing time varies depending on the temperature and pressure at the time of pressing, and is 10 minutes to 6 hours, 15 minutes to 5 hours, 20 minutes to 3 hours, 20 minutes to 2 hours, or 30 minutes to 1 hour.

In the method for manufacturing the all-solid secondary battery, mass production is achievable, and when pressure is applied after stacking the layers easily, a close interface may be formed between the electrode layers and the solid electrolyte layer. In addition, according to the method for manufacturing the all-solid secondary battery, the interface resistance between the positive electrode layer and the solid electrolyte layer can be reduced, and at the same time, battery performance such as rate characteristics and lifetime characteristics can be improved.

In the all-solid secondary battery, the negative electrode layer is prepared by coating a composition including a first negative electrode active material, a binder, and a solvent, and drying.

As the binder, a water-based binder, an organic binder, or a combination thereof may be used. Usable examples of the binder may include polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or a combination thereof.

As the water-based binder, styrene butadiene rubber (SBR), carboxymethylcellulose (CMC), or a combination thereof may be used. When the water-based binder is used, water is used as a solvent.

As the organic binder, polytetrafluoroethylene, polyvinylidene fluoride, or a mixture thereof may be used, and when such an organic binder is used, N-methylpyrrolidone (NMP) or the like is used as a solvent.

In the all-solid secondary battery according to an embodiment, the negative electrode layer may include a negative electrode current collector and a first negative electrode active material layer, a second negative electrode active material layer may be disposed on at least one of an upper portion of the first negative electrode active material layer and between the negative electrode current collector and the first negative electrode active material layer, and the second negative electrode active material layer may include lithium or a lithium alloy.

The negative electrode layer includes a negative electrode current collector and a first negative electrode active material layer, and the negative electrode current collector, the first negative electrode active material layer, and a region therebetween are Li-free regions that do not include Li at an initial state or post-discharge state of the all-solid secondary battery. In addition, the all-solid secondary battery includes a lithium precipitation layer between the negative electrode current collector and the first negative electrode active material layer during charging or after charging.

Hereinafter, an all-solid secondary battery according to exemplary embodiments will be described in more detail.

[All-Solid Secondary Battery]

Referring to FIG. 2, an all-solid secondary battery 1 includes: a positive electrode layer 10; a negative electrode layer 20; and a solid electrolyte layer 30 disposed between the positive electrode layer 10 and the negative electrode layer 20. The positive electrode layer 10 includes a positive electrode current collector 11 and a positive electrode active material layer 12 disposed on the positive electrode current collector 11, and the negative electrode layer 20 includes a negative electrode current collector 21 and a first negative electrode active material layer 22 according to an embodiment, disposed on the negative electrode current collector.

[Positive Electrode Layer: Positive Electrode Current Collector]

As the positive electrode current collector 11, a plate or foil, which is made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li) or an alloy thereof, is used. The positive electrode current collector 11 may be omitted.

[Positive Electrode Layer: Positive Electrode Active Material]

The positive electrode active material layer 12 may include, for example, a positive electrode active material and a solid electrolyte. The solid electrolyte included in the positive electrode layer 10 may be similar to or different from the solid electrolyte included in the solid electrolyte layer 30. As to a detailed description of the solid electrolyte, the description of the solid electrolyte layer 30 may be referred to.

The positive electrode active material may be a positive electrode active material that can reversibly absorb and desorb lithium ions. The positive electrode active material may include, for example, lithium transition metal oxide, such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate, nickel sulfide, copper sulfide, lithium sulfide, iron oxide, or vanadium oxide, but not necessarily limited thereto. Any suitable positive electrode active material that is used in the art may be used. These positive electrode active material may be used alone or in a mixture of two or more of the foregoing materials.

The lithium transition metal oxide may be, for example, a compound represented by at least one of the following formula: $LiaA1-bB'bD2$ (wherein $0.90 \leq a \leq 1$, and $0 \leq b \leq 0.5$); $LiaE1-bBbO2-cDc$ (wherein $0.90 \leq a \leq 1$, $0 \leq b \leq 0.5$, and $0 \leq c \leq 0.05$); $LiE2-bBbO4-cDc$ (wherein $0 \leq b \leq 0.5$, and $0 \leq c \leq 0.05$); $LiaNi1-b-cCobBcD\alpha$ (wherein $0.90 \leq a \leq 1$, $0 \leq b \leq 0.5$, $0 \leq c \leq 0.05$, and $0 < \alpha \leq 2$); $LiaNi1-b-cCobBcO2-\alpha F\alpha$ (wherein $0.90 \leq a \leq 1$, $0 \leq b \leq 0.5$, $0 \leq c \leq 0.05$, and $0 < \alpha \leq 2$); $LiaNi1-b-cCobBcO2-\alpha F2$ (wherein $0.90 \leq a \leq 1$, $0 \leq b \leq 0.5$, $0 \leq c \leq 0.05$, and $0 < \alpha < 2$); $LiaNi1-b-cMnbBcD\alpha$ (wherein $0.90 \leq a \leq 1$, $0 \leq b \leq 0.5$, $0 \leq c \leq 0.05$, and $0 < \alpha \leq 2$); $LiaNi1-b-cMnbBcO2-\alpha F\alpha$ (wherein $0.90 \leq a \leq 1$, $0 \leq b \leq 0.5$, $0 \leq c \leq 0.05$, and $0 < \alpha \leq 2$); $LiaNi1-b-cMnbBcO2-\alpha F2$ (wherein $0.90 \leq a \leq 1$, $0 \leq b \leq 0.5$, $0 \leq c \leq 0.05$, and $0 < \alpha \leq 2$); $LiaNibEcGdO2$ (wherein $0.90 \leq a \leq 1$, $0 \leq b \leq 0.9$, $0 \leq c \leq 0.5$, and $0.001 \leq d \leq 0.1$); $LiaNibCocMndGeO2$ (wherein $0.90 \leq a \leq 1$, $0 \leq b \leq 0.9$, $0 \leq c \leq 0.5$, $0 \leq d \leq 0.5$, and $0.001 \leq e \leq 0.1$); $LiaNiGbO2$ (wherein $0.90 \leq a \leq 1$ and $0.001 \leq b \leq 0.1$); $LiaCoGbO2$ (wherein $0.90 \leq a \leq 1$ and $0.001 \leq b \leq 0.1$); $LiaMnGbO2$ (wherein $0.90 \leq a \leq 1$ and $0.001 \leq b \leq 0.1$); $LiaMn2GbO4$ (wherein $0.90 \leq a \leq 1$ and $0.001 \leq b \leq 0.1$); $QO2$; $QS2$; $LiQS2$; $V2O5$; $LiV2O5$; $LiIO2$; $LiNiVO4$; $Li(3-f)J2(PO4)3$ (wherein $0 \leq f \leq 2$); $Li(3-f)Fe2(PO4)3$ (wherein $0 \leq f \leq 2$); and $LiFePO4$. In these compounds: A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. A compound having a coating layer added to the surface thereof may also be used, and a mixture of at least one of the compounds listed above and a compound having a coating layer added thereto may also be used. The coating layer added to the surface of such compounds includes, for example, a coating element compound which is at least one of an oxide, a hydroxide, an oxyhydroxide, an oxycarbonate, or a hydroxycarbonate of the coating element. The compound constituting the coating layer is amorphous or crystalline. The coating elements included in the coating layer include Mg, Al, Co, K, Na, Ca, Si, Ti, V, Sn, Ge, Ga, B, As, Zr, or mixtures thereof. The method for forming the coating layer formation method is selected within a range that does not adversely affect the physical properties of the positive electrode active material. The coating method is, for example, spray coating, a dipping method, or the like. The coating methods may be well understood by those skilled in the art, and thus a detailed description thereof will be omitted.

The positive electrode active material includes, for example, may include, for example a lithium salt of a transition metal oxide having a layered rock salt type structure among the above-listed lithium transition metal oxides. The term "layered rock salt type structure" refers to, for example, a structure in which oxygen atomic layers and metal atomic layers are alternately regularly disposed in the direction of cubic rock salt type <111> planes, by which each atomic layer forms a 2-dimensional plane. The term "cubic rock salt type structure" refers to a sodium chloride (NaCl) type crystal structure, which is a kind of crystal structures, and specifically, a structure in which face-centered cubic (fcc) lattices formed by respective cations and anions are disposed in a way that ridges of the unit lattices are shifted by $\frac{1}{2}$ . The lithium transition metal oxide having such a layered rock salt type structure may be, for example, a ternary lithium transition metal oxide such as $LiNixCoyAlzO2$ (NCA) or $LiNixCoyMnzO2$ (NCM) (wherein $0 < x < 1$, $0 < y < 1$, $0 < z < 1$, and $x+y+z=1$). When the positive electrode active material includes a ternary lithium transition metal oxide having a layered rock salt type structure, the all-solid secondary battery 1 may have further improved energy density and thermal stability.

The positive electrode active material may be covered by a coating layer as described above. The coating layer may be any known coating layer for positive electrode active materials of all-solid secondary batteries. The coating layer may be, for example, $Li2O-ZrO2$ (LZO) or the like.

When the positive electrode active material may include, for example, nickel (Ni) in a ternary lithium transition metal oxide such as NCA or NCM, the all-solid secondary battery 1 may have an increased capacity density and thus metal elution from the positive electrode active material may be reduced in a charged state. As a result, the all-solid secondary battery 1 may have improved cycle characteristics in a charged state.

The positive electrode active material may be in the shape of particles, for example, a true-spherical particle shape or an oval-spherical particle shape. The particle diameter of the positive electrode active material is not particularly limited, and may be in a range applicable to a positive electrode active material of an all-solid secondary battery according to the related art. The particle size of the positive electrode active material is not particularly limited, and is within a range applicable to the positive electrode active material of a conventional all-solid secondary battery. An amount of the positive electrode active material in the positive electrode 10 is not particularly limited, and may be in a range applicable to a positive electrode of an all-solid secondary battery according to the related art.

[Positive Electrode Layer: Solid Electrolyte]

The positive electrode active material layer 12 may include, for example, a solid electrolyte. The solid electrolyte included in the positive electrode layer 10 may be the same as or different from the solid electrolyte included in the solid electrolyte layer 30. As to a detailed description of the solid electrolyte, the description of the solid electrolyte layer 30 may be referred to.

The solid electrolyte included in the positive electrode active material layer 12 may have a smaller D50 average particle diameter than the solid electrolyte included in the solid electrolyte layer 30. For example, the D50 average particle diameter of the solid electrolyte included in the positive electrode active material layer 12 is 90 % or less, 80 % or less, 70 % or less, 60 % of the D50 average particle diameter of the solid electrolyte included in the solid electrolyte layer 30 or less, 50 % or less, 40 % or less, 30 % or less, or 20 % or less.

[Positive Electrode Layer: Binder]

The positive electrode active material layer 12 may include a binder. The binder may be, for example, styrene butadiene rubber (SBR), polytetrafluoroethylene, polyvinylidene fluoride, polyethylene, or the like.

[Positive Electrode Layer: Conductive Material]

The positive electrode active material layer 12 may include a conductive material. The conductive material may be, for example, graphite, carbon black, acetylene black, Ketjen black, carbon fiber, metal powder, or the like.

[Positive Electrode Layer: Other Additives]

The positive electrode layer 10 may further include additives such as a filler, a coating agent, a dispersant, and an ion conductive auxiliary agent in addition to the above-described positive electrode active material, solid electrolyte, binder, and conductive material.

As a filler, a coating agent, a dispersant, an ion conductivity aid, etc. that may be included in the positive electrode layer 10, any known material that is generally used for electrodes of solid-state secondary batteries may be used.

[Solid Electrolyte Layer]

The solid electrolyte may be a sulfide-based solid electrolyte.

[Solid electrolyte layer: sulfide-based solid electrolyte]

Referring to FIGS. 2 to 4, the solid electrolyte layer 30 includes a sulfide-based solid electrolyte disposed between the positive electrode 10 and the negative electrode layer 20.

The sulfide-based solid electrolyte is one or more selected from, for example, Li2S-P2S5, Li2S-P2S5-LiX (where X is a halogen element), Li2S-P2S5-Li2O, Li2S-P2S5-Li2O-LiI, Li2S-SiS2, Li2S-SiS2-LiI, Li2S-SiS2-LiBr, Li2S-SiS2-LiCl, Li2S-SiS2-B2S3-LiI, Li2S-SiS2-P2S5-LiI, Li2S-B2S3, Li2S-P2S5-ZmSn (where m and n are positive numbers, and Z is one of Ge, Zn and Ga), Li2S-GeS2, Li2S-SiS2-Li3PO4, Li2S-SiS2-LipMOq (where p and q are positive numbers, and M is one of P, Si, Ge, B, Al, Ga, and In), Li7-xPS6-xClx (where $0 \leq x \leq 2$), Li7-xPS6-xBrx (where $0 \leq x \leq 2$), Li7-xPS6-xIx (where $0 \leq x \leq 2$), and Li7-xPS6-xIx (where $0 \leq x \leq 2$). The sulfide-based solid electrolyte is prepared by treating a starting material, for example, such as Li2S, P2S5, or the like, by melt quenching or mechanical milling. Further, after these treatments, thermal treatment may further be performed. The solid electrolyte may be amorphous, crystalline, or a mixture thereof. In addition, the solid electrolyte may include, for example, any of the above-listed sulfide-based solid electrolyte materials including at least sulfur (S), phosphorus (P), and lithium (Li) as constituent elements. For example, the solid electrolyte may be a material including Li2S-P2S5. When Li2S-P2S5 is used as the sulfide-based solid electrolyte material, a mixed mole ratio of Li2S to P2S5 may be, for example, 50:50 to 90:10.

The sulfide-based solid electrolyte may be, for example, an argyrodite-type compound including one or more selected from Li7-xPS6-xClx (0≤x≤2), Li7-xPS6-xBrx (0≤x≤2), and Li7-xPS6-xIx (0≤x≤2). In particular, the sulfide-based solid electrolyte may be an argyrodite-type compound including one or more selected from Li6PS5Cl, Li6PS5Br, and Li6PS5I.

The argyrodite-type solid electrolyte may have a density of 1.5 to 2.0 g/cc. Since the argyrodite-type solid electrolyte has a density of 1.5 g/cc or more, the internal resistance of the all-solid secondary battery is reduced, and penetration of the solid electrolyte due to Li can be effectively suppressed.

The elastic modulus of the solid electrolyte may be, for example, 15 to 35 GPa.

[Solid Electrolyte Layer: Binder]

The solid electrolyte layer 30 may include, for example, a binder. The binder included in the solid electrolyte layer 30 may be, for example, styrene butadiene rubber (SBR), polytetrafluoroethylene, polyvinylidene fluoride, polyethylene, etc., but is not limited thereto, and any binder that is used as a binder in the art may be used. The binder of the solid electrolyte layer 30 may be the same as or different from the binder included in the positive electrode active material layer 12 and the first negative electrode active material layer 22.

[Negative Electrode Layer]

[Structure of Negative Electrode Layer]

The thickness of the first negative electrode active material layer 22 is, for example, 50 % or less, 40 % or less, 30 % or less, 20 % or less, 10 % or less, or 5 % or less of the thickness of the positive electrode active material layer. The thickness of the first negative electrode active material layer is, for example, 1 μm to 20 μm, 2 μm to 10 μm, or 3 μm to 7 μm. If the thickness of the first negative electrode active material layer is too small, lithium dendrites formed between the first negative electrode active material layer 22 and the negative electrode current collector 21 may destroy the first negative electrode active material layer, making it difficult to improve the cycle characteristics of the all-solid secondary battery 1. If the thickness of the negative electrode active material layer is excessively increased, the energy density of the all-solid secondary battery 1 is lowered and the internal resistance of the all-solid secondary battery 1 due to the first negative electrode active material layer increases, making it difficult to improve cycle characteristics of the all-solid secondary battery 1.

When the thickness of the first negative electrode active material layer decreases, the charge capacity of the first negative electrode active material layer, for example, also decreases. The charge capacity of the first negative electrode active material layer 22 is, for example, 50 % or less, 40 % or less, 30 % or less, 20 % or less, 10 % or less, 5 % or less, or less than 2%, in comparison with the charge capacity of the positive electrode active material layer 12. The charge capacity of the first negative electrode active material layer 22 is, for example, 0.1 % to 50 %, 0.1 % to 40 %, 0.1 % to 30 %, 0.1 % to 20 %, 0.1 % to 10 %, 0.1 % to 5 %, or 0.1 % to 2 %, in comparison with the charge capacity of the positive electrode active material layer 12. If the charge capacity of the first negative electrode active material layer 22 is too small, the first negative electrode active material layer 22 becomes very thin, and thus lithium dendrites formed between the first negative electrode active material layer 22 and the first negative electrode current collector 21 may destroy the first negative electrode active material layer 22, making it difficult to improve the cycle characteristics of the all-solid secondary battery 1. If the charge capacity of the first negative electrode active material layer 22 excessively increases, the energy density of the all-solid secondary battery 1 decreases and the internal resistance of the all-solid secondary battery 1 due to the first negative electrode active material layer 22 increases, making it difficult to improve cycle characteristics of the all-solid secondary battery 1.

The charge capacity of the positive electrode active material layer 12 is obtained by multiplying the charge capacity density (mAh/g) of the positive electrode active material layer by the mass of the positive electrode active material in the positive electrode active material layer 12. When several types of positive electrode active materials are used, the (charge capacity density × mass) value is calculated for each positive electrode active material, and the sum of these values corresponds to the charge capacity of the positive electrode active material layer 12. The charge capacity of the first negative electrode active material layer 22 is also calculated in the same manner. That is, the charge capacity of the first negative electrode active material layer 22 is obtained by multiplying the charge capacity density (mAh/g) of the negative electrode active material by the mass of the negative electrode active material in the first negative electrode active material layer 22. When several types of negative active materials are used, the (charge capacity density × mass) value is calculated for each negative electrode active material, and the sum of these values corresponds to the charge capacity of the first negative electrode active material layer 22. Here, the charge capacity densities of the positive electrode active material and the negative electrode active material are capacities estimated by using an all-solid half-cell using lithium metal as a counter electrode. The charge capacities of the positive electrode active material layer 12 and the first negative electrode active material layer 22 are directly measured through charge capacity measurement using an all-solid half-cell. By dividing the measured charge capacity by the mass of each active material, the charge capacity density is obtained. Alternatively, the charge capacities of the positive electrode active material layer 12 and the first negative electrode active material layer 22 may be initial charge capacities measured during charging at the first cycle.

[Negative Electrode Layer: Negative Electrode Current Collector]

The negative electrode current collector 21 may consist of, for example, a material which does not react with lithium, that is, a material which does not form an alloy or compound with lithium. The material constituting the negative electrode current collector 21 is, for example, copper (Cu), stainless steel, titanium (Ti), iron (Fe), cobalt (Co), and nickel (Ni), but is not necessarily limited thereto, and any material that is used as an electrode current collector in the relevant technical field may be used. The thickness of the negative current collector is 1 to 20 $\mu$m, for example, 5 to 15 $\mu$m, for example 7 to 10 $\mu$m.

The negative electrode current collector 21 may include one of the above-listed metals, an alloy thereof, or a coated material of two or more of the above-listed metals. The negative electrode current collector 21 is, for example, in the form of a plate or foil.

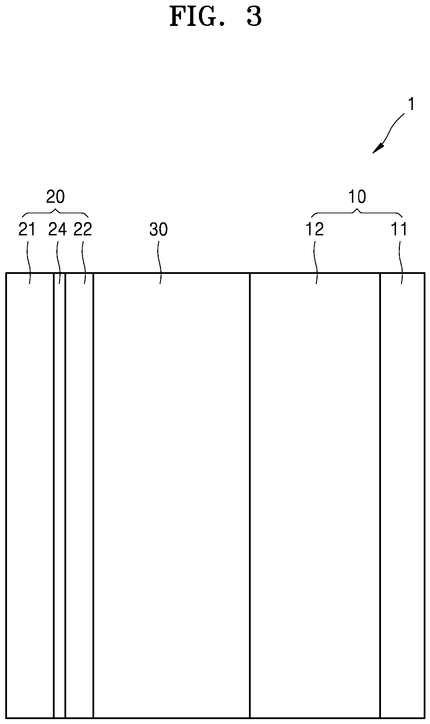

Referring to FIG. 3, the all-solid secondary battery 1 further includes, for example, a thin film 24 including an element capable of forming an alloy with lithium, on a negative electrode current collector 21. The thin film 24 is disposed between the negative electrode current collector 21 and the first negative electrode active material layer 22.

Thin film 24 includes an element capable of forming an alloy with, for example, lithium. The element capable of forming an alloy with lithium may include, for example, gold, silver, zinc, tin, indium, silicon, aluminum, bismuth, etc., but are not necessarily limited thereto, and any element that is capable of forming an alloy with lithium in the art may be used. The thin film 24 may include one of these metals, or an alloy of several types of metals. Due to the arrangement of the thin film 24 on the negative electrode current collector 21, for example, a second negative electrode active material layer (not shown) deposited between the thin film 24 and the first negative electrode active material layer 22 may become further planarized and the cycle characteristics of the all-solid secondary battery 1 may be further improved.

The thickness of the thin film 24 is, for example, 1 nm to 800 nm, 10 nm to 700 nm, 50 nm to 600 nm, or 100 nm to 500 nm. When the thickness of the thin film is less than 1 nm, it may be difficult to exert the function by the thin film 24. If the thin film is too thick, the thin film 24 itself absorbs lithium, and thus the amount of lithium deposited in the negative electrode layer may decrease, resulting in a decrease in the energy density of the all-solid battery, and degradation in cycle characteristics of the all-solid secondary battery 1. The thin film 24 may be disposed on the negative current collector 21 by, for example, vacuum deposition, sputtering, or plating, but is not necessarily limited thereto, and any suitable method that is capable of forming the thin film 24 in the art may be used.

[Negative Electrode Layer: Negative Electrode Active Material]

The negative electrode layer 20 includes a negative electrode current collector 21 and a first negative electrode active material layer 22 disposed on the negative electrode current collector. The first negative electrode active material layer 22 includes, for example, a negative electrode active material and a binder.

When the negative electrode active material in the first negative electrode active material layer 22 includes a metal, a metalloid, or a combination thereof, the negative electrode active material has a particle shape, for example. The average particle diameter of the particle-shaped negative electrode active material is, for example, 4 $\mu$m or less, 2 $\mu$m or less, 1 $\mu$m or less, or 900 nm or less. The average particle diameter of the particle-shaped negative electrode active material is, for example, 10 nm to 4 $\mu$m, 10 nm to 2 $\mu$m, or 10 nm to 900 nm. When the negative electrode active material has an average particle diameter within these ranges, reversible absorbing and/or desorbing of lithium may be more easily performed during charging and discharging. The average particle diameter of the negative electrode active material is, for example, a median diameter (D50) measured using a laser type particle size distribution analyzer.

First Negative Electrode

[Negative Electrode Layer: Binder]

The binder included in the first negative electrode active material layer 22 is, for example, styrene butadiene rubber (SBR), polytetrafluoroethylene, polyvinylidene fluoride, polyethylene, a vinylidene fluoride/hexafluoropropylene copolymer, polyacrylonitrile, polymethyl methacrylate, etc., but is not necessarily limited thereto, and any suitable binder that is used as a binder in the art may be used. The binder may be formed of one binder or a plurality of different binders.

By the inclusion of the binder in the first negative electrode active material layer 22, the first negative electrode active material layer 22 is stabilized on the negative electrode current collector 21. In addition, cracking of the first negative electrode active material layer 22 is suppressed despite a volume change and/or a relative position change of the first negative electrode active material layer 22 during charging and discharging processes. For example, when the first negative electrode active material layer 22 does not include a binder, the first negative electrode active material layer 22 may be easily separated from the negative electrode current collector 21. In the portion where the negative electrode current collector 21 is exposed by the separation of the negative electrode active material layer 22 from the negative electrode current collector 21, the negative electrode current collector 21 contacts the second solid electrolyte layer 23, and thus the occurrence possibility of short circuits may increase. The first negative electrode active material layer 22 is prepared by, for example, coating a slurry in which materials constituting the first negative electrode active material layer 22 are dispersed, on the negative electrode current collector 21, and drying. The inclusion of the binder in the first negative electrode active material layer 22 enables the negative electrode active material the negative electrode active material to be stably dispersed in the slurry. For example, when the slurry is coated on the negative electrode current collector 21 by screen printing, clogging of the screen (for example, clogging by aggregates of the negative electrode active material) may be suppressed.

[Negative Electrode Layer: Other Additives]

The first negative electrode active material layer 22 may further include additives used in conventional all-solid secondary battery, for example, a filler, a coating agent, a dispersant, and an ion conductive auxiliary agent.

[Negative Electrode layer: First Negative Electrode Active Material Layer]

The thickness of the first negative electrode active material layer 22a is, for example, 50% or less, 40% or less, 30% or less, 20% or less, 10% or less, or 5% or less of the thickness of the positive electrode active material layer 12. The thickness of the first negative electrode active material layer 22a is, for example, 1 $\mu$m to 20 $\mu$m, 2 $\mu$m to 10 $\mu$m, or 3 $\mu$m to 7 $\mu$m. When the thickness of the first negative electrode active material layer 22a is within the range stated above, the all-solid secondary battery 1 may have excellent cycle characteristics, and the first negative electrode active material layer 22a may have excellent charge capacity. The charge capacity of the first negative electrode active material layer 22a is, for example, 50% or less, 30% or less, 10% or less, 5% or less, or 2% or less, in comparison with the charge capacity of the positive electrode active material layer 12. The charge capacity of the first negative electrode active material layer 22a is, for example, 0.1 % to 50 %, 0.1 % to 30 %, 0.1 % to 10 %, 0.1 % to 5 %, or 0.1 % to 2 %, in comparison with the charge capacity of the positive electrode active material layer 12. When the charge capacity of the first negative electrode active material layer 22a is within the range stated above, the thickness of the first negative electrode active material layer 22a is controlled to be within an appropriate range, and thus the all-solid secondary battery 1 may have excellent cycle characteristics and energy density during repeated charge and discharge processes.

The charge capacity of the positive electrode active material layer 12 is obtained by multiplying the charge capacity density (mAh/g) of the positive electrode active material layer by the mass of the positive electrode active material in the positive electrode active material layer 12. When several types of positive electrode active materials are used, the (charge capacity density $\times$ mass) value is calculated for each positive electrode active material, and the sum of these values corresponds to the charge capacity of the positive electrode active material layer 12. The charge capacity of the first negative electrode active material layer 22a is also calculated in the same manner. That is, the charge capacity of the first negative electrode active material layer 22a is obtained by multiplying the charge capacity density (mAh/g) of the negative electrode active material by the mass of the negative electrode active material in the first negative electrode active material layer 22a. When several types of negative electrode active materials are used, the (charge capacity density $\times$ mass) value is calculated for each negative electrode active material, and the sum of these values corresponds to the charge capacity of the first negative electrode active material layer 22a. Here, the charge capacity densities of the positive electrode active material and the negative electrode active material are capacities estimated by using an all-solid half-cell using a lithium metal as a counter electrode. The charge capacities of the positive electrode active material layer 12 and the first negative electrode active material layer 22a are directly measured through charge capacity measurement using an all-solid half-cell. By dividing the measured charge capacity by the mass of each active material, the charge capacity density is obtained. Alternatively, the charge capacities of the positive electrode active material layer 12 and the first negative electrode active material layer 22a may be initial charge capacities measured during charging at the first cycle.

[Negative Electrode Layer: Precipitation Layer]

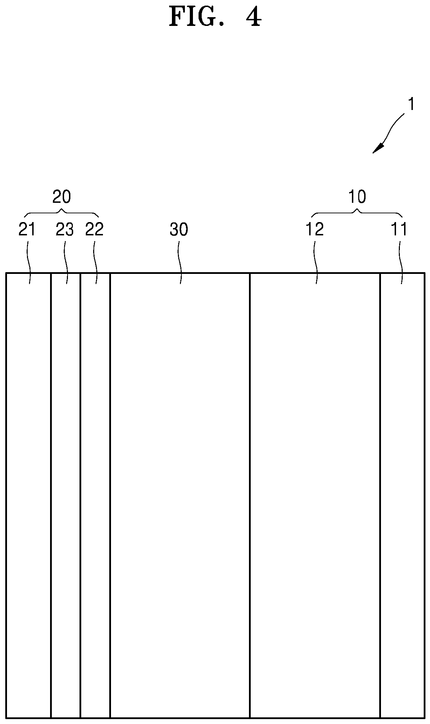

Referring to FIG. 4, the all-solid secondary battery 1 further includes a second negative electrode active material layer 23 disposed between, for example, the negative electrode current collector 21 and the first negative electrode active material layer 22, through charging. Although not shown in the drawing, the all-solid secondary battery 1 may further include a second negative electrode active material layer 23 disposed between the solid electrolyte layer 30 and the first negative electrode active material layer 22, through charging, or may also include a second negative electrode active material layer 23 alone.

The second negative electrode active material layer 23 is a metal layer including lithium or a lithium alloy. The metal layer includes lithium or a lithium alloy. Therefore, the second negative electrode active material layer 23 is a metal layer including lithium, and thus functions as, for example, a lithium reservoir. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy, is not limited thereto, and any suitable lithium alloy that is used in the art may be used. The second negative electrode active material layer 23 may consist of one of these alloys or lithium, or may consist of several types of alloys.

The thickness of the second negative electrode active material layer is not particularly limited, and may be, for example, 1 $\mu$m to 1000 $\mu$m, 1 $\mu$m to 500 $\mu$m, 1 $\mu$m to 200 $\mu$m, 1 $\mu$m to 150 $\mu$m, 1 $\mu$m to 100 $\mu$m, or 1 $\mu$m to 50 $\mu$m. If the thickness of the second negative electrode active material layer is too small, it may be difficult for the second negative electrode active material layer 23 to function as a lithium reservoir. If the second negative electrode active material layer is too thick, the mass and volume of the all-solid-state secondary battery 1 may increase, and cycle characteristics thereof may rather deteriorate. The second negative electrode active material layer 23 may be, for example, a metal foil having a thickness within these ranges.

In the all-solid secondary battery 1, the second negative electrode active material layer 23, for example, may be disposed between the negative electrode current collector 21 and the first negative electrode active material layer 22 before assembly of the all-solid secondary battery 1, or may be precipitated between the negative electrode current collector 21 and the first negative electrode active material layer 22 through charging after assembly of the solid secondary battery 1.

When the second negative electrode active material layer 23 is disposed between the negative electrode current collector 21 and the first negative electrode active material layer 22 before assembly of the all-solid secondary battery 1, the second negative electrode active material layer 23, as a metal layer including lithium, may function as a lithium reservoir. The cycle characteristics of the all-solid secondary battery 1 including the second negative electrode active material layer 23 are further improved. For example, a lithium foil is disposed between the negative electrode current collector 21 and the first negative electrode active material layer 22 before assembly of the all-solid secondary battery 1.

When the second negative electrode active material layer 23 is disposed through charging after assembly of the solid-state secondary battery 1, by not including the second negative electrode active material layer 23 when assembling the solid-state secondary battery 1, the energy density of the solid secondary battery 1 increases. For example, when charging the all-solid secondary battery 1, charging is performed in excess of the charge capacity of the first negative electrode active material layer 22. That is, the first negative electrode active material layer 22 is overcharged. At an initial charging stage, lithium is absorbed into the first negative electrode active material layer 22. That is, the negative electrode active material included in the first negative electrode active material layer 22 forms an alloy or compound with lithium ions moved from the positive electrode layer 10. When charging is performed in excess of the charge capacity of the first negative electrode active material layer 22, for example, lithium is precipitated on the rear surface of the first negative electrode active material layer 22, that is, between the negative electrode current collector 21 and the first negative electrode active material layer 22, and by the precipitated lithium, a metal layer corresponding to the second negative electrode active material layer 23 is formed. The second negative electrode active material layer 23 may be a metal layer including lithium (i.e., metal lithium) as a main component. This result is attributed to, for example, the fact that the negative electrode active material included in the first negative electrode active material layer 22 is composed of a material that forms an alloy or compound with lithium. During discharging, lithium in the first negative electrode active material layer 22 and the second negative electrode active material layer 23, that is, lithium in the metal layer, is ionized and moves toward the positive electrode layer 10. Therefore, the all-solid secondary battery 1 may use lithium as a negative electrode active material. In addition, since the first negative electrode active material layer 22 covers the second negative electrode active material layer 23, the first negative electrode active material layer 22 may function as a protective layer of the second negative electrode active material layer 23, that is, the metal layer, and at the same time suppresses precipitation and growth of lithium dendrite. Therefore, a short circuit and reduction in capacity of the all-solid secondary battery 1 are suppressed, and consequently cycle characteristics of the all-solid secondary battery 1 are improved. In addition, when the second negative electrode active material layer 23 is disposed through charging after assembly of the all-solid secondary battery 1, the negative electrode current collector 21, the first negative electrode active material layer 22, and a region therebetween are Li-free regions that do not include lithium (Li) at an initial state or post-discharge state of the all-solid secondary battery.

The all-solid secondary battery according to an embodiment can be applied to a medium- or large-sized battery or an energy storage system (ESS).

Through the following Examples and Comparative Examples, the present inventive concept will be described in more detail. However, the examples are provided only for illustrating the present inventive concept, and the scope of the present inventive concept is not limited thereto.

Preparation Example 1

A positive electrode active material having an aLi2O-ZrO2 coating film was prepared according to the method disclosed in Korean Patent Publication No. 10-2016-0064942, and the positive electrode active material prepared in the following manner was used.

In a mixed solution of LiNi0.9Co0.05Mn0.05O2 (NCM) as a positive electrode active material, lithium methoxide, zirconium propoxide, ethanol, and ethyl acetoacetate, stirring and mixing for 30 minutes were performed to prepare an alcohol solution of aLi2O-ZrO2 (where a=1) (a coating solution for coating aLi2O-ZrO2). Here, the contents of lithium methoxide and zirconium propoxide were adjusted such that the content of aLi2O-ZrO2 (where a=1) coated on the surface of the positive electrode active material was 0.5 mol%.

Next, the coating solution for coating aLi2O-ZrO2 was mixed with fine powder of the positive electrode active material, and the mixed solution was heated to about 40 °C while stirring to evaporate and dry a solvent, such as alcohol. Here, ultrasonic waves were radiated to the mixed solution.

By carrying out the processes above, the precursor of aLi2O-ZrO2 could be supported on the surface of the particles of the fine powder of the positive electrode active material.

In addition, the precursor of aLi2O-ZrO2 (where a=1) supported on the particle surface of the positive electrode active material was heat-treated at about 350 °C under an oxygen atmosphere for 1 hour. In this heat treatment process, the precursor for aLi2O-ZrO2 (where a=1) present on the surface of the positive electrode active material was changed into aLi2O-ZrO2 (where a=1). The content of Li2O-ZrO2 (LZO) is about 0.4 parts by weight based on 100 parts by weight of NCM.

According to the manufacturing process described above, LiNi0.9Co0.05Mn0.05O2 (NCM) having an aLi2O-ZrO2 coating film was obtained. In aLi2O-ZrO2, a is 1.

Example 1

(Manufacture of Negative Electrode Layer)

A SUS foil having a thickness of 10 $\mu$m was prepared as a negative electrode current collector.

In addition, a mixture was prepared by mixing, at a weight ratio of 25:62.5:5:6:3, amorphous carbon black (primary particle size (average particle diameter): 38 nm, BET specific surface area: 55 m$^2$/g, Lc: 1.6, and D/G intensity ratio: 2.81), crystalline carbon black (primary particle size (average particle diameter): 48 nm, BET specific surface area: 39 m$^2$/g, Lc: 2.9, and D/G intensity ratio: 1.07), Ag nanoparticles as a negative electrode active material (average particle diameter: about 60 nm), and styrene butadiene rubber (SBR) and sodium carboxymethyl cellulose (CMC) at a weight ratio of 2:1 as water-based binders. In the mixture, the mixed weight ratio of amorphous carbon black and crystalline carbon black was controlled to 30:70 as shown in Table 1 below. A binder solution was prepared from the SBR and CMC by using water as a solvent.

The mixture was stirred with a Thinky mixer to adjust to an appropriate viscosity. Next, 2 mm zirconia balls were added and stirred with a Thinky mixer to prepare a slurry. After coating the stirred slurry on a SUS foil, vacuum drying was performed at 100 °C to prepare a negative electrode layer having a thickness of 10 $\mu$m.

(Manufacture of Solid Electrolyte Layer)

Isobutylyl isobutylate (IBIB) as a binder solution was added to an argyrodite-type solid electrolyte Li6PS5Cl and mixed. Here, the mixture was stirred with a Thinky mixer to adjust to an appropriate viscosity. A mixed weight ratio of the solid electrolyte and the binder was 98.5:1.5. After adjusting the viscosity of the mixture to 2,000 cP, zirconia balls having an average diameter of 2 mm were added and stirred again with a Thinky mixer to prepare a slurry. The slurry was cast on a release polyethylene terephthalate (PET) film and dried at room temperature (25 °C) to prepare a solid electrolyte layer.

(Manufacture of Positive Electrode Layer)

LiNi0.9Co0.05Mn0.05O2 (NCM) coated with Li2O-ZrO2 (LZO), obtained according to Preparation Example 1, was prepared as a positive electrode active material. Li6PS5Cl (D50=1 $\mu$m or less, crystalline), which is an argyrodite-type crystal, was used as a solid electrolyte. In addition, a polytetrafluoroethylene (PTFE) binder (Teflon binder of DuPont Corporation) was used as a binder, and carbon nanofibers (CNF) as a conductive agent were prepared. A positive electrode active material composition in which these materials were mixed with xylene at a weight ratio of positive electrode active material: solid electrolyte: conductive agent: binder = 85:15:3:1.5 was molded into a sheet form, followed by drying in vacuum at 45 °C for 2 hours, to manufacture a positive electrode layer having a thickness of about 150 μm.

(Manufacture of All-Solid Secondary Battery)

The solid electrolyte layer was disposed between the positive electrode layer and the negative electrode layer to prepare a laminate. The prepared laminate was pressed by WIP at 80 °C at a pressure of 500 MPa for60 minutes to prepare an all-solid secondary battery. The solid electrolyte layer was sintered by such pressing treatment, thereby improving battery characteristics. The thickness of the sintered solid electrolyte layer was about 45 μm. The thickness of the pressed positive electrode active material layer was about 120 μm, the thickness of the negative electrode active material layer was 12 μm, the thickness of the solid electrolyte layer was 120 μm, and the thickness of the mixed layer was 2 μm.

Examples 2 to 6 and Comparative Examples 1 and 2

When manufacturing a negative electrode layer of an all-solid secondary battery, the manufacturing was performed in the same manner as in Example 1, except that the composition of a negative electrode material was controlled to be changed as shown in Table 2 below.

Comparative Example 3

When manufacturing a negative electrode layer, an all-solid secondary battery was manufactured in the same manner as in Example 1, except that graphite (TGS (manufactured by BTR) having a D/G intensity ratio of 0.18 and BET specific surface area of less than 15 m/g) was used.

[Table 2]

| Classification | Mixed weight ratio of amorphous carbon and crystalline carbon | Graphite |
|---|---|---|
| Example 1 | 1:2.5 | 0 |
| Example 2 | 1:1 | 0 |
| Example 3 | 1:0.67 | 0 |
| Example 4 | 1:0.33 | 0 |
| Example 5 | 1:0.18 | 0 |
| Example 6 | 1:0.05 | 0 |
| Comparative Example 1 | 1:0 | 0 |
| Comparative Example 2 | 0:1 | 0 |
| Comparative Example 3 | - | 100 |

Evaluation Example 1: Raman Analysis

Raman analysis was performed using Raman 2010 Spectra (NT-MDT Development Co.) (Laser system: 473, 633, 785 nm, Lowest Raman shift: ~ 50 cm-1, Spatial resolution: about 500 nm).
Carbon-based materials show peaks at 1350 cm-1, 1580 cm-1, and 2700 cm-1 in the Raman analysis spectra, and these peaks give information about the thickness, crystallinity, and charge doping state of carbon black. The peak appearing at 1580 cm-1 is a peak referred to as G mode, which is caused by a vibration mode corresponding to stretching of a carbon-carbon bond, and the energy of the G-mode is determined by a density of excess electrical charge doped into carbon black. In addition, the peak appearing at 2700 cm-1 is a peak referred to as 2D-mode and is useful when evaluating the thickness of carbon black. The peak at 1350 cm-1 is a peak referred to as D mode, which appears when there is a defect in the SP2 crystal structure. In addition, the D peak to G peak intensity ratio gives information about the degree of disorder of crystals of carbon black.

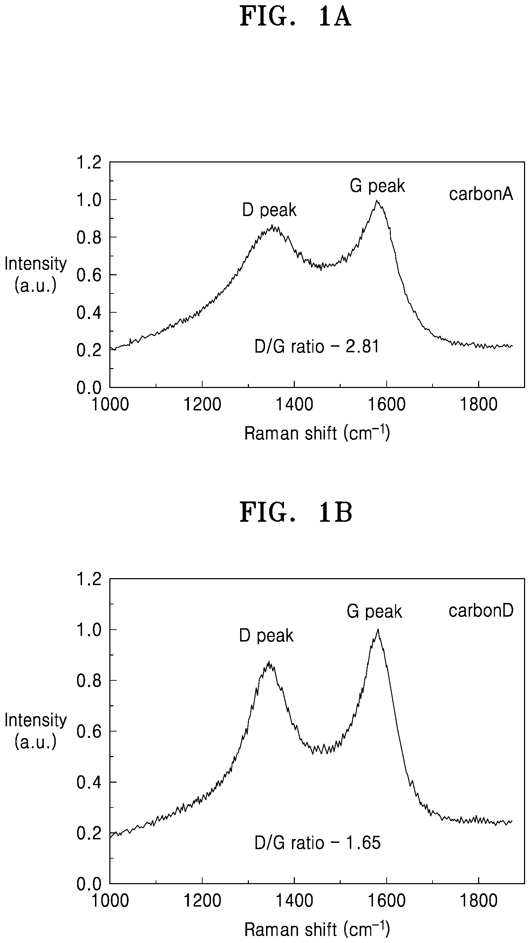

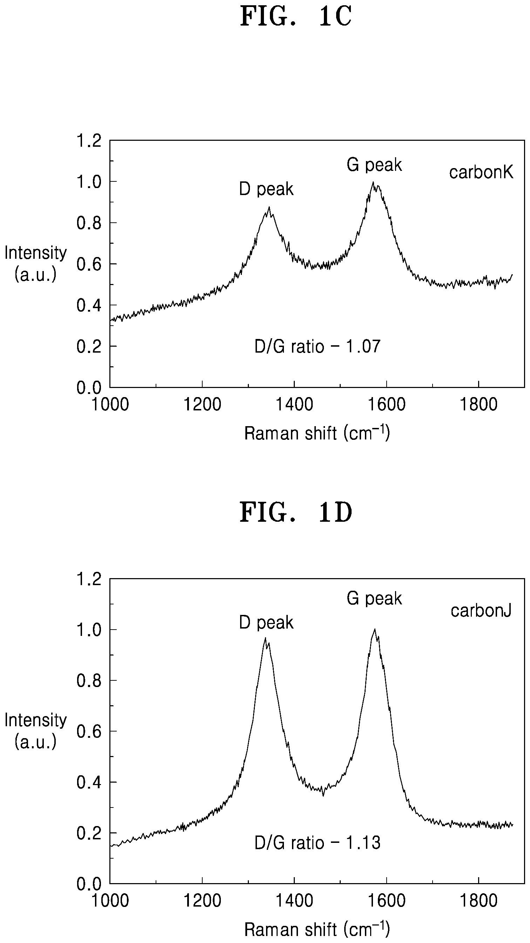

FIGS. 1A and 1B illustrate the results of Raman analysis of carbon A and carbon D, which are amorphous carbon blacks, respectively, and FIGS. 1C and 1D illustrate the results of Raman analysis of carbon K and carbon J, which are crystalline carbon blacks, respectively.
Referring to FIGS. 1A and 1B, the D/G intensity ratios of carbon A and carbon D, which are amorphous carbon blacks, are 2.81 and 1.65. In addition, referring to FIGS. 1C and 1D, the D/G intensity ratios of carbon K and carbon J, which are crystalline carbon blacks, are 1.10 and 1.13.

Evaluation Example 2: 1C Discharge Capacity

Initial discharge capacity was evaluated by performing charging and discharging on the all-solid secondary batteries prepared in Examples 1 to 6 and Comparative Examples 1 to 3. When evaluating the lifetime of the all-solid secondary battery, an initial discharge capacity was evaluated in the following manner under the condition of CC discharging at 1 C up to 2.5 V after CC/CV charging (0.05 C cutoff) at 0.1 C up to 4.25 V at 45 °C.

The charging/discharging test was performed by putting each of the all-solid secondary batteries into a 45 °C thermostat bath.

Charging was performed until the battery voltage reached 4.25 V for about 10 hours with a constant current of 0.1 C and until the current reached 0.05 C with a constant voltage at 4.25 V, and the batteries were left at rest for 10 minutes. Thereafter, discharging was performed for about 1 hour at a constant current of 1 C until the battery voltage reached 2.5 V. After going through these processes, 1 C initial discharge capacities were evaluated and shown in Table 2 below.

Evaluation Example 3: Lifetime

The capacity retention rates of the all-solid secondary batteries manufactured in Examples 1 to 6 and Comparative Examples 1 to 3 were evaluated. When evaluating capacity retention rates, charging and discharging were performed at 45 °C under the conditions of CC/CV charging (0.1 C cutoff) at 0.33 C up to 4.25 V and CC discharging at 0.33 C up to 2.5 V. After evaluating the ratio of the initial capacity and the remaining capacity to the initial capacity after 100 lifetime evaluations is shown in Table 1 below. The detailed description of the evaluation method is as follows.

The charge and discharge characteristics of the all-solid secondary batteries manufactured in Examples 1 to 6 and Comparative Examples 1 to 3 were evaluated by the following charge and discharge test. The charging/discharging test was performed by putting each of the all-solid secondary batteries into a 45 °C thermostat bath.

The battery was charged for 10 hours with a constant current of 0.1 C until the battery voltage reached 4.25 V, and then discharged for 10 hours with a constant current of 0.1 C until the battery voltage reached 2.5 V (first cycle).

Subsequently, the battery was charged for 10 hours with a constant current of 0.1 C until the battery voltage reached 4.25 V, and then discharged for 3 hours with a constant current of 0.33 C until the battery voltage reached 2.5 V (second cycle).

Thereafter, the battery was charged for 10 hours with a constant current of 0.1 C until the battery voltage reached 4.25 V. Subsequently, discharging was performed for 2 hours with a constant current of 0.5 C until the battery voltage reached 2.5 V (third cycle).

Thereafter, the battery was charged for 10 hours with a constant current of 0.1 C until the battery voltage reached 4.25 V. Subsequently, discharging was performed for 1 hour with a constant current of 1 C until the battery voltage reached 2.5 V (fourth cycle).

Thereafter, the battery was charged for 3 hours with a constant current of 0.33 C until the battery voltage reached 4.25 V. Subsequently, discharging was performed for 3 hours with a constant current of 0.33 C until the battery voltage reached 2.5 V (fifth cycle).

These cycles were repeated a total of 110 times to evaluate the capacity change and capacity retention rate according to the number of cycles, respectively. The number of cycles at which the capacity was reduced by 25% was measured according to the United States Advanced Battery Consortium (USABC) regulations.

Evaluation Example 4: Measurement of Initial Irreversible Capacity

In Table 3 below, the all-solid batteries manufactured as half-cells were discharged with 0.05 C for 20 hours, and the initial irreversible capacity was determined by the capacity up to the inflection point that occurs when the voltage drop starts at OCV (about 2.5 V) and reaches the ~0 mV point. The initial irreversible capacity is determined according to Equation 1 below.

Initial irreversible capacity (%) = (capacity up to inflcetion point around 0 mV / total cell capacity) $\times$ 100

[Table 3]

| Classification | Mixed weight ratio of amorphous carbon and crystalline carbon | Graphite | 1 C Discharge capacity (mAh/g) | Lifetime (Number of cycles) | Initial irreversible capacity (%) |
|---|---|---|---|---|---|
| Example 1 | 1:2.5 | 0 | 105 | >100 | 7.5 (○) |
| Example 2 | 1:1 | 0 | 129 | >100 | 8.5 (○) |
| Example 3 | 1:0.67 | 0 | 156 | >100 | 8.9(○) |
| Example 4 | 1 :0.33 | 0 | 170 | >100 | 9.5 (○) |
| Example 5 | 1:0.18 | 0 | 171 | >100 | 9.6 (○) |
| Example 6 | 1:0.05 | 0 | 171 | >100 | 9.9 (○) |
| Comparative Example 1 | 1:0 | 0 | 170 | 82 (NG) | 12.1 (NG) |
| Comparative Example 2 | 0:1 | 0 | 68 (NG) | >100 | 7.1(○) |
| Comparative Example 3 | - | 100 | 30 (NG) | 5 | 4.1(○) |

In Table 3, NG of 1C-rate capacity means less than 100 mAh/g, and O means more than 100 mAh/g. In addition, the lifetime is indicated as O when the capacity retention rate is lowered to less than 25% up to >100 cycles, and the other cases are indicated as NG. In addition, NG of initial irreversible capacity % indicates >10% or more, O indicates <10% or less. When the irreversible capacity is 10%, the energy density decreases. Referring to Table 3, it was found that the all-solid secondary batteries of Examples 1 to 6 had improved 1C discharge capacities as well as improved capacity retention rates and initial irreversible capacity characteristics, , compared to the all-solid secondary batteries of Comparative Examples 1 and 2.

The all-solid secondary battery of Comparative Example 1 was superior to the all-solid secondary battery of Example 1 in 1C and 0.33C discharge capacities, but the capacity retention rate and initial irreversible capacity thereof were lowered. In addition, the all-solid secondary battery of Comparative Example 2 was better than the all-solid secondary battery of Example 1 in capacity retention and initial irreversible capacity, but the 1C and 0.33C discharge capacities thereof were lowered. From this, it was seen that when amorphous carbon black or crystalline carbon black was used alone in preparing the negative electrode layer, the above-described characteristics were lowered, compared to the case where a mixture of amorphous carbon black and crystalline carbon black was used.

The all-solid secondary battery of Comparative Example 3 used only graphite in preparing a negative electrode layer, and, compared to the all-solid secondary battery of Example 1, was poor in characteristics other than the initial irreversible capacity. From these results, it can be seen that the negative electrode layer materials of Examples 1 to 6 exhibited excellent properties in preparing negative electrode layers.

Although exemplary embodiments have been described in detail with reference to the accompanying drawings, the present inventive concept is not limited to these examples. It is obvious that a person skilled in the technical field to which the present inventive concept belongs can derive various examples of changes or modifications within the scope of the technical idea set forth in the appended claims, and, of course, these belong to the technical scope of the present inventive concept.

**Claims**

1. A negative electrode layer for an all-solid secondary battery comprising a negative electrode current collector and a first negative electrode active material layer containing a carbon-based material, wherein

   the carbon-based material includes a mixture of amorphous carbon black and crystalline carbon black, and satisfies that
   a D peak to G peak intensity ratio of the amorphous carbon black, obtained by Raman analysis, is 1.5 or more, and a D peak to G peak intensity ratio of the crystalline carbon black, obtained by Raman analysis, is greater than 0.5 and less than 1.5.

2. The negative electrode layer of claim 1, wherein a mixed weight ratio of the amorphous carbon black and the crystalline carbon black is 1:0.05 to 1:2.5.

3. The negative electrode layer of claim 1, wherein the first negative electrode active material layer further comprises a metal, a metalloid, or a combination thereof,
the metal, metalloid, or combination thereof includes silver, platinum, zinc, silicon, tin, iron, copper, aluminum, indium, bismuth, or a combination thereof.

4. The negative electrode layer of claim 3, wherein the content of the metal, metalloid, or combination thereof is, based on 100 parts by weight of the total weight of the first negative electrode active material layer, 1 to 40 wt % and the content of the carbon-based material is 60 wt% to 99 wt %.

5. The negative electrode layer of claim 1, wherein

the amorphous carbon black has a primary particle size of 15 nm to 60 nm, a specific surface area of 15 m2/g to 1500 m2/g, a crystallite size Lc in the c-axis direction of 3.0 nm or less, and a carbon interlayer spacing (d002) of 0.350 nm to 0.370 nm, and
the crystalline carbon black has a primary particle size of 15 nm to 60 nm, a specific surface area of 15 m2/g to 500 m2/g, a crystallite size Lc in the c-axis direction of 2.0 nm to 10.0 nm, and a carbon interlayer spacing (d002) of 0.335 nm to 0.357 nm.

6. The negative electrode layer of claim 1, wherein the D peak/G peak intensity ratio of the amorphous carbon black is 1.6 to 4.0, and the D peak/G peak intensity ratio of the crystalline carbon black is 0.8 to 1.5.

7. The negative electrode layer of claim 1, further comprising a lithium metal or lithium alloy thin film between the negative electrode current collector and the first negative electrode active material layer.

8. The negative electrode layer of claim 1, further comprising a metal or metalloid thin film between the negative electrode current collector and the first negative electrode active material layer.

9. The negative electrode layer of claim 8, wherein the metal or metalloid thin film includes gold (Au), silver (Ag), magnesium (Mg), zinc (Zn), silicon (Si), tin (Sn), platinum (Pt), palladium ( Pd), aluminum (Al), bismuth (Bi), or a combination thereof, and
the metal or metalloid thin film has a thickness of 1 nm to 800 nm.

10. The negative electrode layer of claim 1, further comprising a second negative electrode active material layer, wherein the second negative electrode active material layer includes a metal, a metalloid element, or a combination thereof capable of forming an alloy with lithium, and is a metal layer including lithium or a lithium alloy.

11. The negative electrode layer of claim 1, wherein

the first negative electrode active material layer includes a binder, and
the binder is styrene butadiene rubber (SBR), polytetrafluoroethylene, polyvinylidene fluoride, polyethylene, carboxymethylcellulose, or a combination thereof.

12. An all-solid secondary battery comprising: a positive electrode layer; a negative electrode layer; and a solid electrolyte layer disposed between the positive electrode layer and the negative electrode layer, wherein
the negative electrode layer is the negative electrode layer of any one of claims 1 to 11.

13. The all-solid secondary battery of claim 12, wherein the negative electrode layer includes a negative electrode current collector and a first negative electrode active material layer, a second negative electrode active material is disposed on at least one of the first negative electrode active material layer and between the negative electrode current collector and the first negative electrode active material layer, and the second negative electrode active material layer includes lithium or a lithium alloy.

14. The all-solid secondary battery of claim 12, wherein the negative electrode layer includes a negative electrode current collector and a first negative electrode active material layer, and the negative electrode current collector, the first negative electrode active material layer, and a region therebetween are lithium (Li)-free regions that do not include Li at an initial state or post-discharge state of the all-solid secondary battery.

15. The all-solid secondary battery of claim 12, wherein a lithium precipitation layer is included between the negative electrode current collector and the negative electrode active material during charging or after charging.

16. The all-solid secondary battery of claim 12, wherein the solid electrolyte layer includes a sulfide-based solid electrolyte.

17. The all-solid secondary battery of claim 16, wherein the sulfide-based solid electrolyte is one or more selected from Li2S-P2S5, Li2S-P2S5-LiX (where X is a halogen element), Li2S-P2S5-Li2O, Li2S-P2S5-Li2O-LiI, Li2S-SiS2, Li2S-SiS2-LiI, Li2S-SiS2-LiBr, Li2S-SiS2-LiCl, Li2S-SiS2-B2S3-LiI, Li2S-SiS2-P2S5-LiI, Li2S-B2S3, Li2S-P2S5-ZmSn (where m and n are positive numbers, and Z is one of Ge, Zn and Ga), Li2S-GeS2, Li2S-SiS2-Li3PO4, Li2S-SiS2-LipMOq (where p and q are positive numbers, and M is one of P, Si, Ge, B, Al, Ga, and In), Li7-xPS6-xClx (where $0 \leq x \leq 2$), Li7-xPS6-xBrx (where $0 \leq x \leq 2$), Li7-xPS6-xlx (where $0 \leq x \leq 2$), and Li7-xPS6-xlx (where $0 \leq x \leq 2$).

18. The all-solid secondary battery of claim 12, wherein the sulfide-based solid electrolyte is an argyrodite-type solid electrolyte including one or more selected from $Li_6PS_5Cl$, $Li_6PS_5Br$, and LisPSsl.

# FIG. 1A

# FIG. 1B

# FIG. 1C

# FIG. 1D

# FIG. 2

# FIG. 3

# FIG. 4

# EP 4 386 881 A1

<table>
<tr><td colspan="2">INTERNATIONAL SEARCH REPORT</td><td>International application No.<br><br>**PCT/KR2022/011813**</td></tr>
</table>

**A. CLASSIFICATION OF SUBJECT MATTER**

**H01M 4/13**(2010.01)i; **H01M 4/134**(2010.01)i; **H01M 4/62**(2006.01)i; **H01M 10/42**(2006.01)i; **H01M 4/38**(2006.01)i; **H01M 10/0562**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/13(2010.01); H01M 10/052(2010.01); H01M 10/0525(2010.01); H01M 10/0569(2010.01); H01M 4/36(2006.01); H01M 4/587(2010.01); H01M 4/88(2006.01); H01M 4/90(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 전고체(all-solid), 카본블랙(carbon black), 라만(raman), d피크/g피크(d peak/g peak)

**C. DOCUMENTS CONSIDERED TO BE RELEVANT**

| Category* | Citation of document, with indication, where appropriate, of the relevant passages | Relevant to claim No. |
|---|---|---|
| A | KR 10-2013-0037090 A (SAMSUNG SDI CO., LTD.) 15 April 2013 (2013-04-15)<br>See claims 1, 4, 8 and 19; and paragraphs [0064] and [0077]. | 1-18 |
| A | EP 2869367 A1 (JNC CORP. et al.) 06 May 2015 (2015-05-06)<br>See entire document. | 1-18 |
| A | JP 6049033 B2 (NATIONAL INSTITUTE FOR MATERIALS SCIENCE) 21 December 2016 (2016-12-21)<br>See entire document. | 1-18 |
| A | KR 10-2017-0094002 A (MITSUBISHI CHEMICAL CORPORATION) 16 August 2017 (2017-08-16)<br>See entire document. | 1-18 |
| A | KR 10-2000-0073252 A (SAMSUNG SDI CO., LTD.) 05 December 2000 (2000-12-05)<br>See entire document. | 1-18 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **14 November 2022** | **14 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/011813**

| Patent document cited in search report | | | Publication date (day/month/year) | Patent family member(s) | | | Publication date (day/month/year) |
|---|---|---|---|---|---|---|---|
| KR | 10-2013-0037090 | A | 15 April 2013 | CN | 103107335 | A | 15 May 2013 |
| | | | | EP | 2579365 | A1 | 10 April 2013 |
| | | | | EP | 2579365 | B1 | 28 November 2018 |
| | | | | JP | 2013-084601 | A | 09 May 2013 |
| | | | | JP | 6207143 | B2 | 04 October 2017 |
| | | | | KR | 10-1708360 | B1 | 21 February 2017 |
| | | | | US | 2013-0089784 | A1 | 11 April 2013 |
| EP | 2869367 | A1 | 06 May 2015 | CN | 104412423 | A | 11 March 2015 |
| | | | | CN | 104412423 | B | 30 January 2018 |
| | | | | CN | 107256957 | A | 17 October 2017 |
| | | | | CN | 107256957 | B | 19 May 2020 |
| | | | | EP | 2869367 | A4 | 24 February 2016 |
| | | | | JP | 2016-002602 | A1 | 30 May 2016 |
| | | | | JP | 6183362 | B2 | 23 August 2017 |
| | | | | KR | 10-2015-0027236 | A | 11 March 2015 |
| | | | | KR | 10-2075639 | B1 | 10 February 2020 |
| | | | | US | 2015-0214548 | A1 | 30 July 2015 |
| | | | | WO | 2014-002602 | A1 | 03 January 2014 |
| JP | 6049033 | B2 | 21 December 2016 | JP | 2017-087894 | A1 | 05 January 2017 |
| | | | | WO | 2014-087894 | A1 | 12 June 2014 |
| KR | 10-2017-0094002 | A | 16 August 2017 | CN | 101292389 | A | 22 October 2008 |
| | | | | CN | 101292389 | B | 22 September 2010 |
| | | | | CN | 102931434 | A | 13 February 2013 |
| | | | | CN | 102931434 | B | 16 September 2015 |
| | | | | CN | 104659414 | A | 27 May 2015 |
| | | | | CN | 104659414 | B | 12 April 2019 |
| | | | | CN | 104752642 | A | 01 July 2015 |
| | | | | CN | 104752642 | B | 20 April 2018 |
| | | | | CN | 105186038 | A | 23 December 2015 |
| | | | | CN | 105186038 | B | 28 July 2017 |
| | | | | CN | 105375064 | A | 02 March 2016 |
| | | | | EP | 1939971 | A1 | 02 July 2008 |
| | | | | EP | 1939971 | B1 | 09 December 2020 |
| | | | | EP | 2560229 | A2 | 20 February 2013 |
| | | | | EP | 2560229 | B1 | 05 June 2019 |
| | | | | EP | 3217463 | A1 | 13 September 2017 |
| | | | | EP | 3217463 | B1 | 05 June 2019 |
| | | | | EP | 3557684 | A2 | 23 October 2019 |
| | | | | EP | 3840101 | A1 | 23 June 2021 |
| | | | | KR | 10-1345052 | B1 | 26 December 2013 |
| | | | | KR | 10-1548851 | B1 | 01 September 2015 |
| | | | | KR | 10-1930127 | B1 | 17 December 2018 |
| | | | | KR | 10-2008-0056226 | A | 20 June 2008 |
| | | | | KR | 10-2013-0090913 | A | 14 August 2013 |
| | | | | KR | 10-2014-0005341 | A | 14 January 2014 |
| | | | | KR | 10-2015-0038605 | A | 08 April 2015 |
| | | | | KR | 10-2016-0092063 | A | 03 August 2016 |
| | | | | KR | 10-2018-0135098 | A | 19 December 2018 |
| | | | | KR | 10-2020-0040930 | A | 20 April 2020 |
| | | | | KR | 10-2021-0109674 | A | 06 September 2021 |

Form PCT/ISA/210 (patent family annex) (July 2022)

**INTERNATIONAL SEARCH REPORT**
Information on patent family members

| International application No. |
|---|
| **PCT/KR2022/011813** |

| Patent document cited in search report | Publication date (day/month/year) | Patent family member(s) | | | Publication date (day/month/year) |
|---|---|---|---|---|---|
| | | KR | 10-2062521 | B1 | 06 January 2020 |
| | | KR | 10-2102105 | B1 | 20 April 2020 |
| | | KR | 10-2297569 | B1 | 02 September 2021 |
| | | US | 2010-0015514 | A1 | 21 January 2010 |
| | | US | 2013-0022861 | A1 | 24 January 2013 |
| | | US | 2015-0243936 | A1 | 27 August 2015 |
| | | US | 2017-0040593 | A1 | 09 February 2017 |
| | | US | 2019-0252672 | A1 | 15 August 2019 |
| | | US | 2021-0066707 | A1 | 04 March 2021 |
| | | US | 9029022 | B2 | 12 May 2015 |
| | | US | 9112236 | B2 | 18 August 2015 |
| | | WO | 2007-055087 | A1 | 18 May 2007 |
| KR 10-2000-0073252 A | 05 December 2000 | KR | 10-0318378 | B1 | 22 December 2001 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020160064942